# EUROPEAN PATENT SPECIFICATION

(11) **EP 3 449 175 B1**
(45) Date of publication and mention of the grant of the patent: **24.03.2021**
(21) Application number: 17790015.6
(22) Date of filing: 24.04.2017
(51) Int. Cl.: F17C 13/08, B60K 15/01, B60K 15/03, B60K 15/07, F02M 21/02, F17C 1/00, B60K 15/063, F17C 13/12

(54) **AN ARRANGEMENT FOR A LIQUEFIED GAS FUEL SYSTEM FOR A VEHICLE**
ANORDNUNG FÜR EIN FLÜSSIGGASKRAFTSTOFFSYSTEM FÜR EIN FAHRZEUG
AGENCEMENT POUR UN SYSTÈME DE CARBURANT GAZEUX LIQUÉFIÉ POUR UN VÉHICULE

(30) Priority: 27.04.2016 SE 1650560
(43) Date of publication of application: 06.03.2019
(73) Proprietor: Scania CV AB, 151 87 Södertälje (SE)
(72) Inventor: HERMANSSON, Sara, 132 40 Saltsjö Boo (SE); OLSSON, Johan, 175 61 Järfälla (SE)
(74) Representative: Scania CV AB
(86) International application number: PCT/SE2017/050400
(87) International publication number: WO 2017/188882

(56) References cited:
- EP-A2- 1 060 936
- WO-A1-2016/020552
- US-A1- 2002 171 236
- US-A1- 2003 146 214
- US-A1- 2004 075 034
- US-A1- 2014 137 953
- US-A1- 2014 137 953
- US-A1- 2014 150 884
- US-A1- 2014 150 884
- US-A1- 2015 112 506

## Description

### TECHNICAL FIELD

The invention relates to an arrangement for a liquefied gas fuel system for a vehicle. The invention also relates to a vehicle.

### BACKGROUND ART

Alternative fuels such as natural gas and biogas are being introduced in vehicles such as heavy vehicles. For this purpose fuel systems for compressed natural gas, CNG and compressed biogas CBG and fuel systems for liquefied natural gas LNG and liquefied biogas LBG are being developed.

Systems for liquefied gas, i.e. LNG and LBG, require handling of relatively low temperatures, e.g. -130 degrees at 10 bar for LNG, requiring certain conduits for transporting the liquefied natural gas. Further, in order to provide sufficient fuel to be able to travel desired distances, liquefied gas fuel tanks of a certain volume are required. For this purpose it is common to provide dual liquefied gas tanks, one at each side of the vehicle frame.

Liquefied natural gas, LNG, used as fuel for gas trucks is currently transported in rigid pipes from the fuel tank to the engine and venting system. The pipes are long and difficult to mount, especially if the trucks have dual tanks. Further, tensions are often built into such liquefied natural gas systems.

Document US2014/150884A1 discloses a liquid gas system for vehicles, the system comprises two gas reservoirs, connected via feed lines to a changeover switch concurrently integrating a pressure regulator. The changeover switch works as follows: when two full gas reservoirs are connected, the changeover switch is adjusted so that gas is withdrawn from the preselected gas reservoir. When this gas reservoir runs empty, the changeover switch automatically switches over to the second full gas reservoir.

Document US2014/137953A1 discloses a compressed natural gas fuel system comprising a frame, a first container, a second container, a first manifold, a second manifold, and a casing. The first manifold may be engaged to and substantially shrouded by the first side of the frame. The second manifold may be engaged to and substantially shrouded by the second side of the frame.

### OBJECTS OF THE INVENTION

An object of the present invention is to provide an arrangement for a liquefied gas fuel system for a vehicle which facilitates mounting of the system. Another object of the present invention is to provide an arrangement for a liquefied gas fuel system for a vehicle which reduces risk of built in tensions in the system.

### SUMMARY OF THE INVENTION

These and other objects, apparent from the following description, are achieved by an arrangement and a vehicle as set out in the appended independent claim. Preferred embodiments of the arrangement are defined in appended dependent claims.

Specifically an object of the invention is achieved by an arrangement for a liquefied gas fuel system for a vehicle according to claim 1. Said fuel system has two separate liquefied gas fuel tanks for providing fuel to the engine of the vehicle. Said installation of the piping and an easier handling at maintenance. Another advantage is that fewer bendings will allow a less limited flow in the liquefied gas fuel system.

The combination of pipes and hoses provides stiffness provided by the pipes where desirable, for example near the propeller shaft where collisions need to be avoided, and is less costly than an alternative only consisting of hoses.

According to an embodiment of the arrangement the respective interface elements are arranged to support said set of pipes. Hereby the risk of built in tensions in the system is further reduced.

According to an embodiment of the arrangement said connection arrangement comprises a support element for said set of pipes arranged between said interface elements. Hereby the risk of built in tensions in the system is further reduced.

According to an embodiment of the arrangement one interface element is arranged to be connected to one longitudinal side of the vehicle frame and the other interface element is arranged to be connected to the opposite longitudinal side of the vehicle frame.

Hereby an efficient construction for tanks arranged in connection to the respective longitudinal side of the vehicle frame is obtained. By thus arranging the interface elements in connection to the respective side of the longitudinal side of the vehicle frame efficient support for the pipes is facilitated.

According to an embodiment of the arrangement said support element is arranged to be connected to a crossbeam of the vehicle frame. Hereby the risk of built in tensions in the system is further reduced.

According to an embodiment of the arrangement said liquefied gas fuel is liquefied natural gas, LNG, or liquefied biogas, LBG.

Specifically an object of the invention is achieved by a vehicle comprising an arrangement as set out herein.

### BRIEF DESCRIPTION OF THE DRAWINGS

For a better understanding of the present invention reference is made to the following detailed description when read in conjunction with the accompanying drawings, wherein like reference characters refer to like parts throughout the several views, and in which:
Fig. 1 schematically illustrates a perspective view of a vehicle with a liquefied gas fuel system;
Fig. 2 schematically illustrates plan view of the vehicle in fig. 1 with an arrangement for a liquefied gas fuel system according to an embodiment of the present invention;
Fig. 3a schematically illustrates a perspective view of a connection arrangement for fluid connection of two separate liquefied gas fuel tanks for providing fuel to the engine of a vehicle;
Fig. 3b schematically illustrates a front view of the connection arrangement in fig. 3a;
Fig. 4 schematically illustrates a perspective view of the connection arrangement in fig. 3 connected to fuel tanks;
Fig. 5 schematically illustrates a plan view of the connection arrangement in fig. 4; and
Fig. 6 schematically illustrates a detail of the connection arrangement in fig. 5.

### DETAILED DESCRIPTION

Hereinafter the term "liquefied gas" refers to liquefied natural gas, LNG, or liquefied biogas, LBG.

Hereinafter the term "liquefied gas fuel system" refers to a fuel system for liquefied natural gas, LNG, or a fuel system for liquefied biogas, LBG.

Hereinafter the term "flexible hoses" refers to hoses configured to transport fluids for a liquefied gas fuel system being bendable to a certain degree and having a certain flexibility so as to facilitate connection to fuel tanks. The hoses are according to an embodiment made of Polytetrafluoroethylene (PTFE) or internally lined with a layer of PTFE in order to benefit from the methane resistant properties of PTFE.

Hereinafter the term "pipes" refers to rigid pipes configured to transport fluids for a liquefied gas fuel system which do not provide any flexibility or bendability in comparison to said flexible hoses. The pipes are according to an embodiment made of stainless steel. The pipes may also be made of copper.

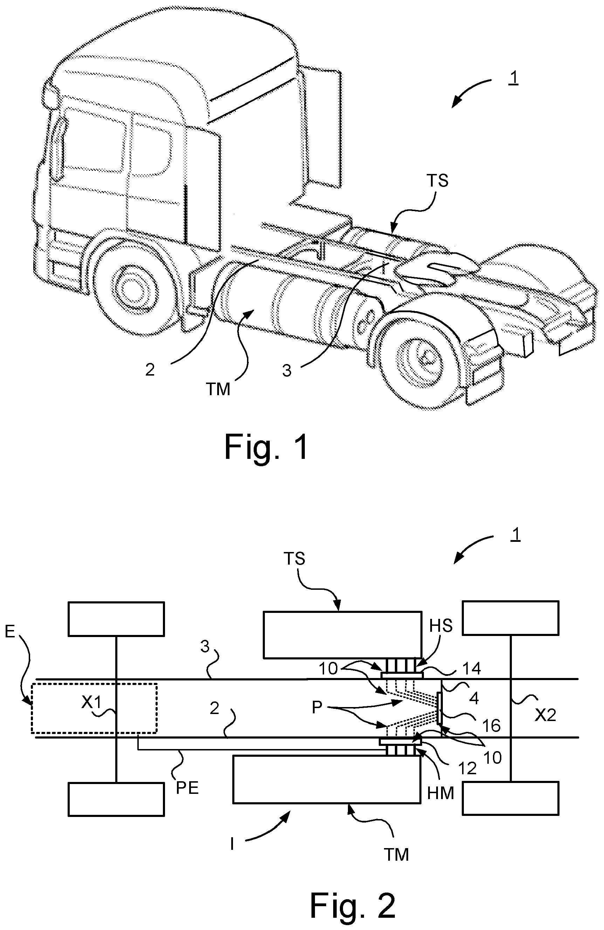

Fig. 1 schematically illustrates a side view of a vehicle 1 according to the present invention. The exemplified vehicle 1 is a heavy vehicle in the shape of a truck. The vehicle according to the present invention could be any suitable vehicle. The vehicle comprises an arrangement for a liquefied gas fuel system for a vehicle.

The vehicle comprises a vehicle frame 2, 3, comprising a left longitudinal vehicle beam 2 and a right longitudinal vehicle beam 3.

The vehicle comprises a left liquefied gas fuel tank TM arranged in connection to the left longitudinal vehicle beam 2 and a right liquefied gas fuel tank TS arranged in connection to the right longitudinal beam 3. The tanks TM, TS have an essentially cylindrical shape and are arranged on the respective side of the longitudinal vehicle beams 2, 3 axially extending along the respective longitudinal beam 2, 3.

Fig. 2 schematically illustrates plan view of the vehicle in fig. 1 with the vehicle frame 2, 3, 4. The vehicle frame 2, 3, 4 comprises a left longitudinal vehicle beam 2 and a right longitudinal vehicle beam 3. The vehicle frame 2, 3, 4 comprises a crossbeam 4 arranged a support between the left and right longitudinal beams 2, 3.

The exemplified vehicle 1 is a heavy vehicle in the shape of a truck. The vehicle 1 in this embodiment has a forward wheeled axle X1 with opposite front wheels and a powered rear wheeled axle X2 with opposite tractive wheels.

The vehicle 1 comprises a liquefied gas fuel system I. The fuel system I comprises the two separate liquefied tanks TM, TS for providing fuel to the engine E of the vehicle 1 via a pipe PE, a left liquefied gas fuel tank TM arranged in connection to the left longitudinal vehicle beam 2 and a right liquefied gas fuel tank TS arranged in connection to the right longitudinal beam 3. The tanks TM, TS are arranged on the respective side of the longitudinal vehicle beams 2, 3 axially extending along the respective longitudinal beam 2, 3.

The left liquefied gas fuel tank TM is denoted the main tank TM and the right liquefied gas fuel tank TS is denoted the auxiliary tank TS of the dual tank installation. The tank TM may also be denoted master tank and the tank TS may also be denoted slave tank.

The fuel system I comprises a connection arrangement 10. The main tank TM and auxiliary tank TS are in in fluid communication via the connection arrangement 10.

The connection arrangement comprises a set of pipes P.

The connection arrangement 10 comprises an interface element 12, 14 for the respective tank TM, TS.

The interface element 12, 14 for the respective tank TM, TS comprises a left interface element 12 arranged to be connected to the left longitudinal beam 2 of the vehicle frame 2, 3, 4.

The interface element 12, 14 for the respective tank TM, TS comprises a right interface element 14 arranged to be connected to the right longitudinal beam 3 of the vehicle frame 2, 3, 4.

The connection arrangement 10 comprises a set of hoses HM, HS directly connected to the respective tank TM, TS. The set of hoses HM, HS comprises a set of hoses HM directly connected to the main tank TM and a set of hoses directly connected to the auxiliary tank TS.

The set of flexible hoses HM, HS for the respective tank TM, TS are connected to the set of pipes via the respective interface element 12, 14. The set of hoses HM directly connected to the main tank TM are connected to the set of pipes P via the interface element 12. The set of hoses HM directly connected to the main tank TM are thus connected to one set of ends of the set of pipes P via the interface element 12. The set of hoses HS directly connected to the auxiliary tank TS are connected to the set of pipes P via the interface element 14. The set of hoses HS directly connected to the auxiliary tank TS are thus connected to the opposite set of ends of the set of pipes P via the interface element 14.

The connection arrangement 10 comprises a support element 16 for said set of pipes P arranged between said interface elements 12, 14. The support element 16 is arranged to be connected to the crossbeam 4 of the vehicle frame 2, 3, 4. The support element 16 is thus arranged to support the set of pipes P. The set of pipes P are connected to the support element 16. The support element 16 thus functions as a crossbeam pipe bracket.

By thus connecting flexible hoses HM, HS via the respective interface element 12, 14 mounting of the liquefied gas fuel system is facilitated. Bigger tolerances for the system, e.g. bigger tolerances for the dimensions of the pipes P due to the flexibility of the hoses HM, HS are hereby obtained. Thus, there is flexibility in the positioning of the respective tank TM, TS due to the flexible hoses. Further, the risk of built in tensions in the system is reduced in that the pipes P are connected via said interface elements 12, 14 to the flexible hoses HM, HS and may thereby be subjected to less tensions. Easier installation and maintenance is hereby facilitated.

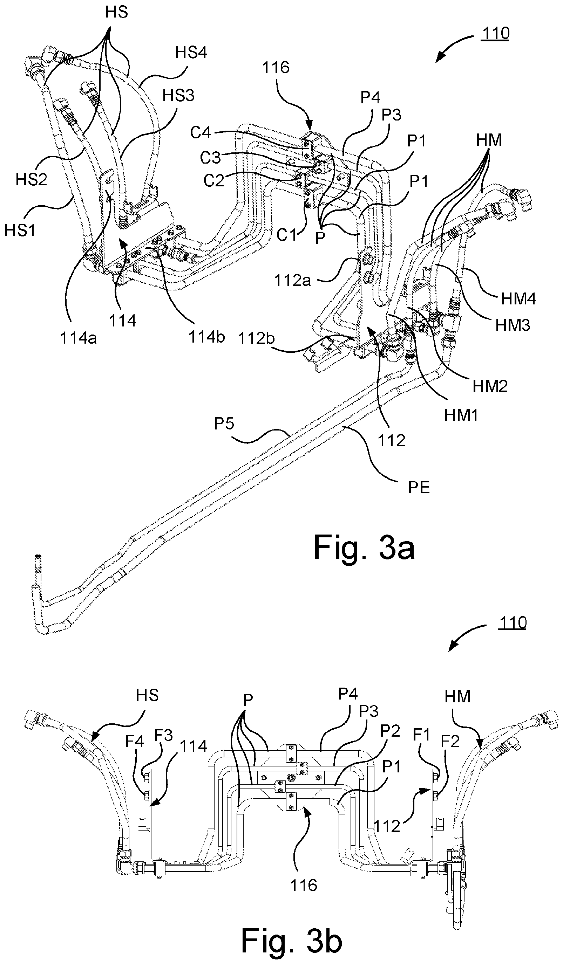

Fig. 3a schematically illustrates a perspective view of a connection arrangement 110 for fluid connection of two separate liquefied gas fuel tanks TM, TS for providing fuel to the engine of a vehicle and fig. 3b schematically illustrates a front view of the connection arrangement 110 in fig. 3a. The fuel tanks TM, TS have here been denoted the same reference signs as in the embodiment in fig. 2.

The connection arrangement 110 according to this embodiment functionally corresponds to the connection arrangement 10. The connection arrangement 10 in fig. 2 is more generally illustrated. The connection arrangement 110 in fig. 3a-b, fig. 4 and fig. 5 according to an embodiment essentially corresponds to the connection arrangement in fig. 2.

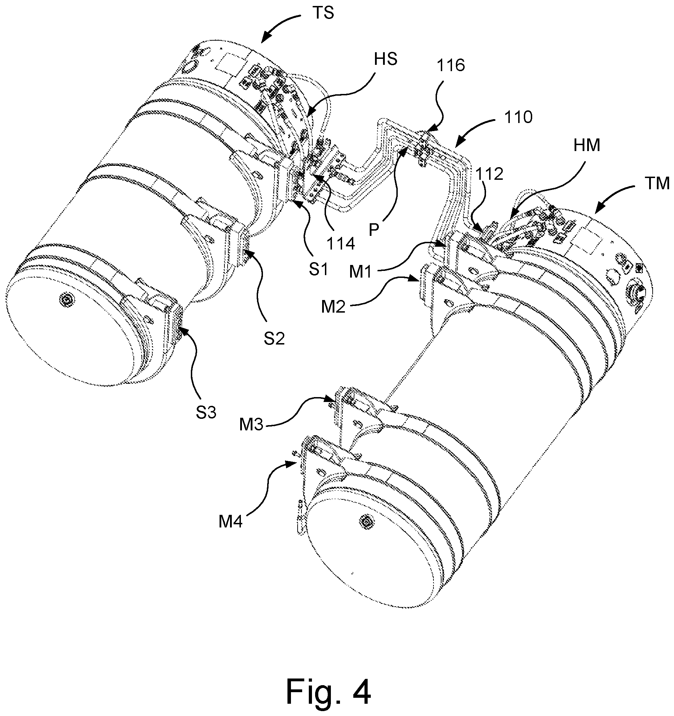

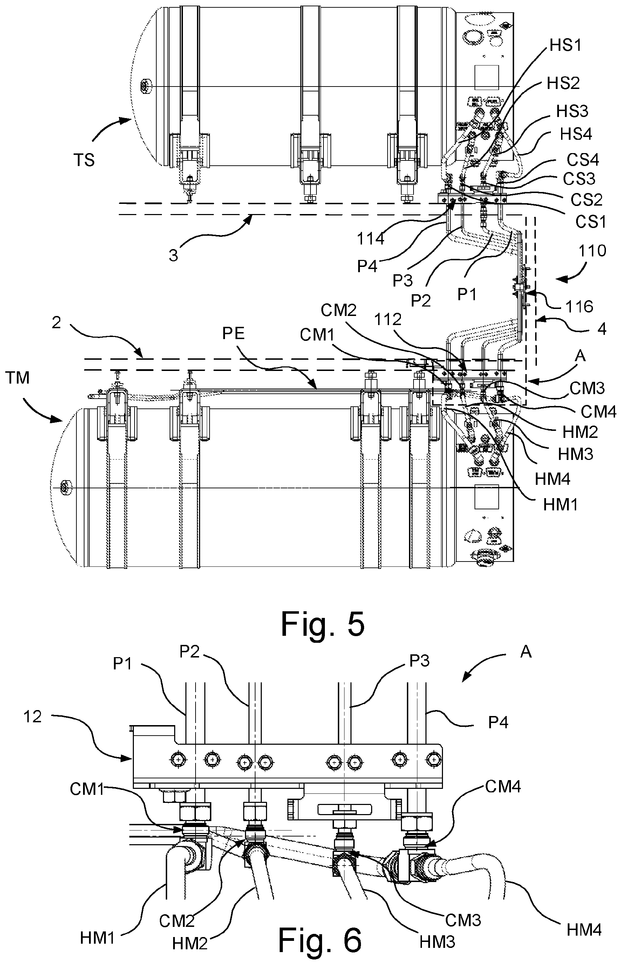

Fig. 4 schematically illustrates a perspective view of the connection arrangement in fig. 3 connected to fuel tanks, fig. 5 schematically illustrates a plan view of the connection arrangement in fig. 4 and fig. 6 schematically illustrates a detail of the connection arrangement in fig. 5.

The connection arrangement comprises a set of pipes P.

The set of pipes P comprises a first pipe P1 configured for transporting liquefied gas, i.e. liquefied natural gas, LNG, or liquefied biogas LBG.

The set of pipes P comprises a second pipe P2 configured for venting in connection to refuelling the tanks TM, TS.

The set of pipes P comprises a third pipe P3 configured for venting of boil-off gas.

The set of pipes P comprises a fourth pipe P4 configured for transporting the gas fuel to the engine.

The connection arrangement 110 comprises an interface element 112, 114 for the respective tank TM, TS.

The interface element 112, 114 for the respective tank TM, TS comprises a left interface element 112. The left interface element 112 is arranged to be connected to the left longitudinal beam 2 of the vehicle frame as illustrated in fig. 5. The left interface element 112 has an upper portion 112a, see fig. 3a, for connecting the left interface 112 to the left longitudinal beam 2 by means of fastening members F1, F2, according to an embodiment screw members, see fig. 3b. The left interface element 112 has a lower portion 112b, see fig. 3a.

The interface element 112, 114 for the respective tank TM, TS comprises a right interface element 114. The right interface element 114 is arranged to be connected to the right longitudinal beam 3 of the vehicle as illustrated in fig. 5. The right interface element 114 has an upper portion 114a, see fig. 3a, for connecting the right interface 114 to the right longitudinal beam 3 by means of fastening members F3, F4, according to an embodiment screw members, see fig. 3b. The right interface element 114 has a lower portion 114b, see fig. 3a.

The connection arrangement 110 comprises a set of flexible hoses HM, HS directly connected to the respective tank TM, TS. The set of flexible hoses HM, HS comprises a set of hoses HM directly connected to the main tank TM and a set of hoses directly connected to the auxiliary tank TS.

The set of flexible hoses HM directly connected to the main tank TM comprises a first hose HM1 configured for transporting liquefied gas, i.e. liquefied natural gas, LNG, or liquefied biogas LBG. The first hose HM1 is connected to one end of the first pipe P1 via the left interface element 112. The first hose HM1 is coupled to the first pipe via coupling member CM1. The coupling member CM1 comprises according to an embodiment a ferrule coupling.

The set of flexible hoses HM directly connected to the main tank TM comprises a second hose HM2 configured for venting in connection to refuelling the tanks TM, TS. The second hose HM2 is connected to one end of the second pipe P2 via the left interface element 112. The second hose HM2 is coupled to the second pipe via coupling member CM2. The coupling member CM2 comprises according to an embodiment a ferrule coupling. The coupling member has a T-coupling configuration for connecting a pipe P5 for said venting.

The set of flexible hoses HM directly connected to the main tank TM comprises a third hose HM3 configured for venting in connection to decoction. The third hose HM3 is connected to one end of the third pipe P3 via the left interface element 112. The third hose HM3 is coupled to the third pipe via coupling member CM3. The coupling member CM3 comprises according to an embodiment a ferrule coupling.

The set of flexible hoses HM directly connected to the main tank HM comprises a fourth hose HM4 configured for transporting the gas fuel to the engine. The fourth hose H4 is connected to one end of the fourth pipe P4 via the left interface element 112. The fourth hose HM4 is coupled to the fourth pipe via coupling member CM4. The coupling member CM4 comprises according to an embodiment a ferrule coupling. The coupling member has a T-coupling configuration for connecting a pipe PE for transporting the gas fuel to the engine. Gas transported via the pipe PE to the engine will be gas fuel from the tank TM, TS having the highest pressure.

The set of flexible hoses HS directly connected to the auxiliary tank TS comprises a first hose HS1 configured for transporting liquefied gas, i.e. liquefied natural gas, LNG, or liquefied biogas LBG. The first hose HS1 is connected to the opposite end of the first pipe P1 via the left interface element 112. The first hose HS1 is coupled to the first pipe via coupling member CS1. The coupling member CS1 comprises according to an embodiment a ferrule coupling.

The set of flexible hoses HM directly connected to the auxiliary tank TS comprises a second hose HS2 configured for venting in connection to refuelling the tanks HS, TS. The second hose HS2 is connected to the opposite end of the second pipe P2 via the left interface element 112. The second hose HS2 is coupled to the second pipe via coupling member CS2. The coupling member CS2 comprises according to an embodiment a ferrule coupling.

The set of flexible hoses HM directly connected to the auxiliary tank TS comprises a third hose HS3 configured for venting in connection to decoction. The third hose HS3 is connected to the opposite end of the third pipe P3 via the left interface element 112. The third hose HS3 is coupled to the third pipe via coupling member CS3. The coupling member CS3 comprises according to an embodiment a ferrule coupling.

The set of flexible hoses HM directly connected to the auxiliary tank TS comprises a fourth hose HS4 configured for transporting the gas fuel to the engine. The fourth hose HS4 is connected to the opposite end of the fourth pipe P4 via the left interface element 112. The fourth hose HS4 is coupled to the fourth pipe via coupling member CS4. The coupling member CS4 comprises according to an embodiment a ferrule coupling.

The coupling members CM1-CM4, CS1-CS4 may be any suitable coupling. The coupling members CM1-CM4, CS1-CS4 being a ferrule coupling may be a double ferrule coupling. The coupling members could also comprise a cutting ring fitting.

The set of flexible hoses HM, HS for the respective tank TM, TS are thus connected to the set of pipes P via the respective interface element 112, 114. The set of flexible hoses HM, HS for the respective tank TM, TS are connected to the set of pipes P via the lower portion 112b, 114b of the respective interface element 112, 114 by means of connecting elements.

The connection arrangement 110 comprises a support element 116 for said set of pipes P arranged between said interface elements 112, 114. The support element 116 is arranged to be connected to the crossbeam 4 of the vehicle frame, see fig. 5. The support element 116 is thus arranged to support the set of pipes P. The set of pipes P are connected to the support element 116 via connecting elements C1, C2, C3, C4. The first pipe P1 is connected to the support element 116 via a first connecting element C1. The second pipe P2 is connected to the support element 116 via a second connecting element C2. The third pipe P3 is connected to the support element 116 via a third connecting element C3. The fourth pipe P4 is connected to the support element 116 via a fourth connecting element C4.

By thus connecting flexible hoses HM1, HM2, HM3, HM4, HS1, HS2, HS3, HS4 via the respective interface element 112, 114 mounting of the liquefied gas fuel system is facilitated. Bigger tolerances for applying the tanks TM in connection to the respective side of the vehicle frame are obtained due to bigger tolerances for the dimensions of the pipes P due to the flexibility of the hoses HM1, HM2, HM3, HM4, HS1, HS2, HS3, HS4 are hereby obtained. Thus, there is flexibility in the positioning of the respective tank TM, TS due to the flexible hoses. Further, the risk of built in tensions in the system is reduced in that the pipes P are connected via said interface elements 12, 14 to the flexible hoses HM, HS and may thereby be subjected to less tensions. Easier installation and maintenance is hereby facilitated.

The main tank TM is arranged to be connected to the left longitudinal beam 2 of the vehicle frame via fastening elements M1, M2, M3; M4 The auxiliary tank TS is arranged to be connected to the right longitudinal beam 2 of the vehicle frame via fastening elements S1, S2, S3.

The interface elements 112, 114 are comprised in an arrangement for a liquefied gas fuel system for a vehicle according to an embodiment of the present invention. The support element 116 is according to an embodiment comprised in said arrangement for a liquefied gas fuel system. The connection arrangement 110 is according to an embodiment comprised in said arrangement for a liquefied gas fuel system.

The foregoing description of the preferred embodiments of the present invention has been provided for the purposes of illustration and description. It is not intended to be exhaustive or to limit the invention to the precise forms disclosed. Obviously, many modifications and variations are possible within the scope of the appended claims and will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated.

## Claims

1. An arrangement for a liquefied gas fuel system for a vehicle (1), said fuel system having two separate liquefied gas fuel tanks (TM, TS) for providing fuel to the engine (E) of the vehicle (1), said fuel tanks (TM, TS) being in fluid communication via a connection arrangement (10; 110) comprising a set of rigid pipes (P), **characterized in that** said connection arrangement (10; 110) comprises interface elements (12, 14; 112, 114) for the respective tank (TM, TS) and a set of flexible hoses (HM, HS) directly connected to the respective tank (TM, TS), wherein the set of flexible hoses (HM, HS) for the respective tank (TM, TS) are connected to the set of rigid pipes (P) via the respective interface elements (12, 14; 112, 114).

2. An arrangement according to claim 1, wherein the respective interface elements (12, 14; 112, 114) are arranged to support said set of rigid pipes (P).

3. An arrangement according to claim 1 or 2, wherein said connection arrangement (10; 110) comprises a support element (16; 116) for said set of rigid pipes (P) arranged between said interface elements (12, 14; 112, 114).

4. An arrangement according to any of claims 1-3, wherein one interface element (12; 112) is arranged to be connected to one longitudinal side (2) of the vehicle frame and the other interface element (14; 114) is arranged to be connected to the opposite longitudinal side (3) of the vehicle frame.

5. An arrangement according to any of claims 1-4, wherein said support element (16; 116) is arranged to be connected to a crossbeam (4) of the vehicle frame.

6. An arrangement according to any of claims 1-5, wherein said liquefied gas fuel is liquefied natural gas, LNG, or liquefied biogas, LBG.

7. A vehicle (1) comprising an arrangement according to any of claims 1-6.

## Patentansprüche

1. Anordnung für ein Flüssiggaskraftstoffsystem für ein Fahrzeug (1), wobei das Kraftstoffsystem zwei getrennte Flüssiggaskraftstoffbehälter (TM, TS) zum Bereitstellen von Kraftstoff für den Motor (E) des Fahrzeugs (1) hat, wobei die Kraftstoffbehälter (TM, TS) über eine Verbindungsanordnung (10; 110) in Fluidverbindung stehen, die einen Satz starrer Rohre (P) aufweist, **dadurch gekennzeichnet, dass** die Verbindungsanordnung (10; 110) Verbindungselemente (12, 14; 112, 114) für den entsprechenden Behälter (TM, TS) und einen Satz flexibler Schläuche (HM, HS) umfasst, die unmittelbar mit dem entsprechenden Behälter (TM, TS) verbunden sind, wobei der Satz flexibler Schläuche (HM, HS) für den entsprechenden Behälter (TM, TS) über die zugehörigen Verbindungselemente (12, 14; 112, 114) mit dem Satz starrer Rohre (P) verbunden ist.

2. Anordnung nach Anspruch 1, bei der die zugehörigen Verbindungselemente (12, 14; 112, 114) dazu angeordnet sind, den Satz starrer Rohre (P) abzustützen.

3. Anordnung nach Anspruch 1 oder 2, bei der die Verbindungsanordnung (10; 110) ein Haltebauteil (16; 116) für den Satz starrer Rohre (P) aufweist, das zwischen den Verbindungselementen (12, 14; 112, 114) angeordnet ist.

4. Anordnung nach einem der Ansprüche 1 bis 3, bei der ein Verbindungselement (12; 112) dazu angeordnet ist, mit einer Längsseite (2) des Fahrzeugrahmens verbunden zu werden, und das andere Verbindungselement (14; 114) dazu angeordnet ist, mit der entgegengesetzten Längsseite (3) des Fahrzeugrahmens verbunden zu werden.

5. Anordnung nach einem der Ansprüche 1 bis 4, bei der das Haltebauteil (16; 116) dazu angeordnet ist, mit einem Querträger (4) des Fahrzeugrahmens verbunden zu werden.

6. Anordnung nach einem der Ansprüche 1 bis 5, bei der der Flüssiggaskraftstoff Flüssig-Erdgas, LNG, oder Flüssig-Biogas, LBG, ist.

7. Fahrzeug (1), das eine Anordnung nach einem der Ansprüche 1 bis 6 aufweist.

## Revendications

1. Agencement pour un système de combustible gazeux liquéfié pour un véhicule (1), ledit système de combustible ayant deux réservoirs de combustible gazeux liquéfié séparés (TM, TS) pour la fourniture du carburant au moteur (E) du véhicule (1), lesdits réservoirs de carburant (TM, TS) étant en communication fluide via un agencement de connexion (10 ; 110) comprenant un ensemble de tuyaux rigides (P), **caractérisé en ce que** ledit agencement de connexion (10 ; 110) comprend des éléments d'interface (12, 14 ; 112, 114) pour le réservoir respectif (TM, TS) et un ensemble de flexibles (HM, HS) directement connectés au réservoir correspondant (TM, TS), dans lequel l'ensemble de flexibles (HM, HS) pour le réservoir respectif (TM, TS) sont connectés à l'ensemble de tuyaux rigides (P) via les éléments d'interface respectifs (12, 14 ; 112, 114).

2. Agencement selon la revendication 1, dans lequel les éléments d'interface respectifs (12, 14 ; 112, 114) sont agencés pour supporter ledit ensemble de tuyaux rigides (P).

3. Agencement selon la revendication 1 ou 2, dans lequel ledit agencement de connexion (10 ; 110) comprend un élément de support (16 ; 116) pour ledit ensemble de tuyaux rigides (P) agencés entre lesdits éléments d'interface (12, 14 ; 112, 114).

4. Agencement selon l'une quelconque des revendications 1-3, dans lequel un élément d'interface (12 ; 112) est agencé pour être connecté à un côté longitudinal (2) du châssis du véhicule et l'autre élément d'interface (14 ; 114) est agencé pour être connecté au côté longitudinal opposé (3) du châssis du véhicule.

5. Agencement selon l'une quelconque des revendications 1-4, dans lequel ledit élément de support (16 ; 116) est agencé pour être connecté à une traverse (4) du châssis du véhicule.

6. Agencement selon l'une quelconque des revendications 1-5, dans lequel ledit combustible gazeux liquéfié est du gaz naturel liquéfié, GNL, ou du biogaz liquéfié, du BGL.

7. Véhicule (1) comprenant un agencement selon l'une quelconque des revendications 1-6.
